# EUROPEAN PATENT APPLICATION

(11) **EP 4 458 911 A1**
(43) Date of publication of application: **06.11.2024**
(21) Application number: 22915898.5
(22) Date of filing: 22.12.2022
(51) Int. Cl.: C08L 101/10, C08K 3/013, C08K 5/05, C08K 5/098, C08K 5/31, C08K 5/5425, C08K 5/56, C08L 71/02, C09D 7/63, C09D 201/10, C09J 11/06, C09J 201/10, C09K 3/10

(54) **ROOM-TEMPERATURE-CURING RESIN COMPOSITION AND ARTICLE**

(30) Priority: 27.12.2021 JP 2021212310
(71) Applicant: SHIN-ETSU CHEMICAL CO., LTD., Tokyo 1000005 (JP)
(72) Inventor: UTA Akira, Annaka-shi, Gunma 379-0224 (JP)
(74) Representative: Mewburn Ellis LLP
(86) International application number: PCT/JP2022/047278
(87) International publication number: WO 2023/127675

(57) **Abstract**

A room-temperature-curing resin composition, which contains in specific ratios
(A) an organic polymer in which molecular chain ends are capped by hydrolyzable silyl groups and/or hydroxysilyl groups and
(B) a hydrolyzable organosilane compound represented in general formula (1) below and/or a partially hydrolyzed condensate thereof 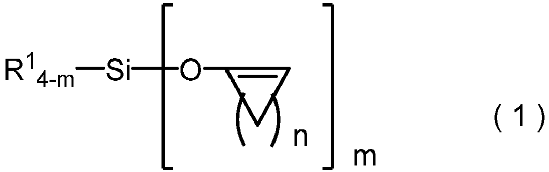 (where R¹ is a monovalent hydrocarbon group having a carbon number of 1-10, n is 1-8, and m is 3 or 4),
has equivalent or superior curing properties compared to conventional alcohol-release or oxime-release room-temperature-curing resin compositions even if various catalysts are used, can reduce harmful effects on humans and environmental load, and can provide a cured rubber product after curing having favorable rubber properties, adhesion, and durability.

## Description

### TECHNICAL FIELD

The present invention relates to a condensation-curable room temperature curable resin composition which is crosslinked (cured) through a hydrolysis/condensation reaction by humidity (moisture) in the air at room temperature (23°C ± 15°C) and in which an organopolymer whose molecular chain end is blocked with a hydrolyzable silyl group and/or a hydroxysilyl group (silyl group or silanol group having a hydroxyl group bonded to a silicon atom) and whose polymer main chain is other than an organopolysiloxane is used as a base polymer, particularly a room temperature curable resin composition in which a leaving compound desorbed/generated from a crosslinking agent (curing agent) through a hydrolysis/condensation reaction during curing (crosslinking) is a cyclic ketone compound such as cyclobutanone or cyclopentanone, and the room temperature curable resin composition is adequately cured through a condensation reaction and gives a rubber cured product other than an organopolysiloxane resin such as silicone rubber, which is excellent in adhesive property, and various articles including the composition or a cured product thereof.

### BACKGROUND ART

A polymer having a reactive silicon group (hereinafter, referred to as a hydrolyzable silyl group) is hydrolyzed and condensed in the presence of moisture, and a silicon group having a hydroxyl group on a silicon atom (hereinafter, referred to as a hydroxysilyl group or a silanol group) is condensed with another hydrolyzable silyl group, and a silanol group. An organopolymer whose molecular chain end is blocked with a hydrolyzable silyl group and/or a hydroxysilyl group and whose polymer main chain is other than an organopolysiloxane does not have, in the main chain, a repeated structure of organosiloxane (silicone structure) except for a linker part (connection part) of the molecular chain end between the polymer main chain and the silyl group, but is generally called a modified silicone polymer because the organopolymer has a reactive silyl group at a molecular chain end, and forms a siloxane structure at a crosslinking point during curing. The organopolymer can be crosslinked and cured in the presence of moisture, and used as a curable resin composition. A room temperature curable resin composition in which an organopolymer whose polymer main chain is other than an organopolysiloxane is used as a base polymer is characterized by being liquid or pasty at room temperature (23°C ± 15°C) and forming a rubber elastic body when cured, and is widely used for coating agents, adhesive agents, sealing materials for buildings and the like by taking advantage of the characteristic.

A room temperature curable resin composition that is cured through a condensation reaction contains a hydrolyzable organosilane compound having a hydrolyzable group in the molecule as a curing agent (crosslinking agent), and as curing agents that have widely used, a deoximation-type hydrolyzable organosilane compound that releases an oxime compound such as 2-butanone oxime during curing, a dealcoholization-type hydrolyzable organosilane compound that releases an alcohol compound such as methanol, and the like are known.

On the other hand, the deoximation-type curing agent is not preferable because an oxime compound such as 2-butanone oxime which is generated by the curing agent during curing may be carcinogenic, and the dealcoholization-type curing agent is not preferable from the viewpoint of the health of the human body because methanol generated by the curing agent during curing is toxic to the human body and is designated as a deleterious substance. Further, these compositions, in which a tin catalyst strictly regulated as an environmentally hazardous substance may be used as a curing catalyst, are not preferable from the viewpoint of securing safety for workers and protecting the environment in recent years, and replacement by a hydrolyzable organosilane compound (curing agents) having a safer leaving group (leaving compound) is required.

Further, the curing agent (crosslinking agent) used for the dealcoholization-type room temperature curable resin composition has lower reactivity as compared to the curing agent used in the deoximation-type room temperature curable resin composition, and therefore the dealcoholization-type has a disadvantage of being inferior in curability to the deoximation type.

From the viewpoint of environmental protection and suppression of health damage, products that are more environmentally friendly and safer while having higher performance are particularly desired, and there is an increasing demand for a room temperature curable organopolysiloxane composition in which a leaving compound has high safety and excellent performance is exhibited.

In WO 2019/077942 (Patent Document 1), curability higher than that of a conventional modified silicone-based composition is achieved by using a polyoxyalkylene compound which has, at an end thereof, a hydrolyzable silyl group having a thioether bond at the β position. JP-A 2018-87348 (Patent Document 2) indicates that by using a polyoxyalkylene compound having a silanol group at an end thereof, a composition excellent in curability can be obtained using a crosslinking agent other than a conventional dealcoholization-type crosslinking agent, such as a deoximation-type or acetic acid-type crosslinking agent. However, in these reported cases, the leaving group is methanol or oxime having high toxicity, acetic acid having high metal corrosiveness, or the like as before, and development of a composition having a safer leaving group is desired.

### PRIOR ART DOCUMENTS

### PATENT DOCUMENTS

| | |
|---|---|
| Patent Document 1: | WO 2019/077942 |
| Patent Document 2: | JP-A 2018-87348 |
| Patent Document 3: | JP 6565787 |

### SUMMARY OF INVENTION

### TECHNICAL PROBLEM

The present invention has been made in view of the above-described circumstances, and an object of the present invention is to provide a room temperature curable resin composition in which an organopolymer whose molecular chain end is blocked with a hydrolyzable silyl group and/or a hydroxysilyl group (silyl group or silanol group having a hydroxyl group bonded to a silicon atom) and whose polymer main chain is other than an organopolysiloxane (modified silicone polymer) is used as a base polymer, and in which a hydrolyzable organosilane compound whose leaving group (leaving compound) is a cyclic ketone compound such as cyclobutanone or cyclopentanone, which has not been reported to have health harmfulness to the human body such as carcinogenicity and reproduction toxicity and environmental harmfulness such as toxicity to aquatic organisms and which has a relatively high burning point, is used as a curing agent. Regardless of which catalyst is used, the room temperature curable resin composition is comparable or superior in curability to conventional dealcoholization-type and deoximation-type room temperature curable resin compositions, and less harmful to the human body and less environmentally hazardous, and can give a rubber cured product having good rubber physical properties, adhesive property and durability after curing. Another object of the present invention is to provide various articles including the composition or a cured product obtained by curing the composition.

### SOLUTION TO PROBLEM

The present inventors have extensively conducted studies for achieving the above-described objects, and resultantly found that a room temperature curable resin composition in which an organopolymer whose polymer main chain is other than an organopolysiloxane (modified silicone polymer) and in which the room temperature curable resin composition contains a hydrolyzable organosilane compound, which is represented by the following general formula (1) and desorbs and releases a cyclic ketone compound such as cyclobutanone or cyclopentanone as a leaving group (leaving compound), and/or a partial hydrolytic condensate thereof as a curing agent (crosslinking agent) solves the problems about harmfulness to the human body and the environment and safety, and even if an organic compound containing titanium, guanidine or the like is added as a curing catalyst to this composition, curability and cured product performance equivalent to those when a tin catalyst is added is exhibited, leading to attainment of the present invention. 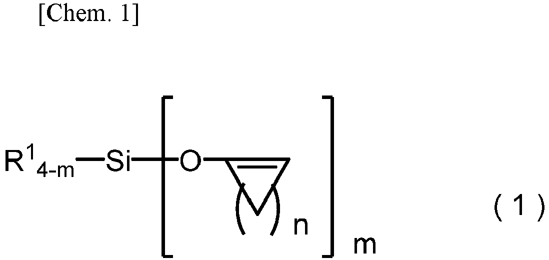 wherein R¹ is a monovalent hydrocarbon group having 1 to 10 carbon atoms, n is an integer of 1 to 8, and m is 3 or 4.

That is, the present invention provides the following room temperature curable resin composition, various articles (e.g. automobile parts, automobile oil seals, electric and electronic parts, building structures, civil engineering structures, adhesive agents, sealing materials, potting agents and coating agents) including the composition or a cured product thereof.
[1] A room temperature curable resin composition including:
   (A) 100 parts by weight of an organopolymer whose molecular chain end is blocked with a hydrolyzable silyl group and/or a hydroxysilyl group and whose polymer main chain is other than an organopolysiloxane; and
   (B) 1 to 40 parts by weight of a hydrolyzable organosilane compound of the following general formula (1) and/or a partial hydrolytic condensate thereof: 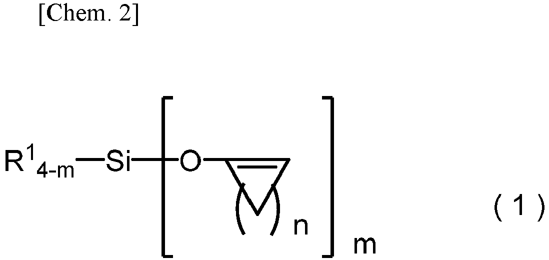 wherein R¹ is a monovalent hydrocarbon group having 1 to 10 carbon atoms, n is an integer of 1 to 8, and m is 3 or 4.
[2] The room temperature curable resin composition according to [1], wherein the hydrolyzable organosilane compound and/or a partial hydrolytic condensate thereof as the component (B) desorbs a cyclic ketone compound by hydrolysis.
[3] The room temperature curable resin composition according to [2], wherein the cyclic ketone compound desorbed is cyclobutanone or cyclopentanone.
[4] The room temperature curable resin composition according to any one of [1] to [3], wherein a numerical average molecular weight of the organopolymer as the component (A) is 2,000 to 50,000.
[5] The room temperature curable resin composition according to any one of [1] to [4], further including (C) 0.01 to 10 parts by weight of a curing catalyst per 100 parts by weight of the component (A).
[6] The room temperature curable resin composition according to [5], wherein the (C) curing catalyst is at least one selected from a tin catalyst, a titanium catalyst, an organic strong base catalyst, and an organobismuth catalyst.
[7] The room temperature curable resin composition according to any one of [1] to [6], which is free of a tin catalyst.
[8] The room temperature curable resin composition according to any one of [1] to [7], further including (D) 0.01 to 5 parts by weight of a silane coupling agent of the following general formula (2) and/or a partial hydrolytic condensate thereof per 100 parts by weight of the component (A):

   R²R³ₐSiX₃₋ₐ (2)

   wherein R² is a monovalent hydrocarbon group having 1 to 20 carbon atoms and having at least one functional group (with exclusion of a guanidyl group) containing one or more heteroatoms selected from a nitrogen atom, a sulfur atom and an oxygen atom; R³ is an unsubstituted or substituted monovalent hydrocarbon group having 1 to 10 carbon atoms, and X is a hydrolyzable group; and a is 0, 1 or 2.
[9] The room temperature curable resin composition according to any one of [1] to [8], further including (E) 1 to 500 parts by weight of an inorganic filling agent per 100 parts by weight of the component (A).
[10] The room temperature curable resin composition according to [9], wherein the component (E) is one or more inorganic filling agents selected from calcium carbonate, fumed silica, precipitated silica, carbon black and aluminum oxide.
[11] An automobile part including a cured product of the room temperature curable resin composition according to any one of [1] to [10].
[12] An automobile oil seal including a cured product of the room temperature curable resin composition according to any one of [1] to [10].
[13] An electrical or electronic part including a cured product of the room temperature curable resin composition according to any one of [1] to [10].
[14] A building structure including a cured product of the room temperature curable resin composition according to any one of [1] to [10].
[15] A civil engineering structure including a cured product of the room temperature curable resin composition according to any one of [1] to [10].
[16] An adhesive agent including the room temperature curable resin composition according to any one of [1] to [10].
[17] A sealing material including the room temperature curable resin composition according to any one of [1] to [10].
[18] A potting agent including the room temperature curable resin composition according to any one of [1] to [10].
[19] A coating agent including the room temperature curable resin composition according to any one of [1] to [10].

### ADVANTAGEOUS EFFECTS OF INVENTION

The room temperature curable resin composition of the present invention can be suitably used for various adhesive agents, sealing materials, potting agents, coating agents and the like favoring the health and safety of the human body because a compound (leaving compound) generated from a curing agent (crosslinking agent) through a hydrolysis and condensation reaction during curing is a cyclic ketone compound having high safety, such as cyclobutanone or cyclopentanone, and the composition is excellent in curability and adhesive property after curing, and gives a silicone rubber cured product (elastomeric cured product). Further, the room temperature curable resin composition of the present invention can be suitably used for various adhesive agents, sealing materials, potting agents, coating agents and the like favoring environmental protection (reduction of hazardousness) because even if an organic compound containing titanium, bismuth, guanidine or the like is added as a curing catalyst, curability and cured product performance equivalent to those when a tin catalyst is added is exhibited.

### DESCRIPTION OF EMBODIMENTS

Hereinafter, the present invention is described in detail.

### [Component (A)]

A component (A) for use in the present invention is an organopolymer whose molecular chain end is blocked with a hydrolyzable silyl group and/or a hydroxysilyl group (silyl group or silanol group having a hydroxyl group bonded to a silicon atom) and whose polymer main chain is other than an organopolysiloxane (modified silicone polymer), and the organopolymer acts as a base polymer in a room temperature curable resin composition of the present invention. The modified silicone polymer as the component (A) may have a short-chain siloxane structure (preferably about 1 to 5 repeat diorganosiloxane units) in a connection part (linker part) connecting a silyl group at a molecular chain end and a main chain.

As such a base polymer, an organopolymer whose molecular chain end is blocked with a hydrolyzable silyl group (for example, alkoxysilyl group) and/or a hydroxysilyl group (silanol group) and whose polymer main chain is other than an organopolysiloxane can be suitably used without limitation on the main chain structure. In particular, it is preferable that polymer main chain has a structure of a polymer such as a polyoxyalkylene such as polypropylene oxide, polyethylene oxide, polyisobutylene oxide or a propylene oxide-ethylene oxide copolymer, a polyalkylene such as polyisobutylene, polyacrylate or polymethacrylate from the viewpoint of easy availability, and a part of the main chain structure may be a urethane structure (-NHC(=O)O-), an ester structure (-C(=O)-O) or the like.

The organopolymer as the component (A) whose molecular chain end is blocked with a hydrolyzable silyl group and/or a hydroxysilyl group (silyl group or silanol group having a hydroxyl group bonded to a silicon atom) and whose polymer main chain is other than an organopolysiloxane (modified silicone polymer) is preferably a silylated oxyalkylene polymer, a silylated urethane polymer, a silylated acrylate polymer or a silylated alkylene polymer.

Specific examples of the silylated oxyalkylene polymer include polymers having a structure in which a main chain has a structure of a polyoxyalkylene such as polypropylene oxide, polyethylene oxide or a propylene oxide-ethylene oxide copolymer, and a molecular chain end, in particular, both molecular chain ends, are blocked with a hydrolyzable silyl group and/or a silanol group (polyether-modified silicone polymers).

Specific examples of the silylated urethane polymer include polymers having a structure in which a main chain has a structure of a polyoxyalkylene such as polypropylene oxide, polyethylene oxide or a propylene oxide-ethylene oxide copolymer, a part of the main chain structure is a urethane bond structure with an isocyanate (-NHC(=O)O-), and a molecular chain end, in particular, both molecular chain ends, are blocked with a hydrolyzable silyl group and/or a silanol group (urethane-modified silicone polymers).

Specific examples of the silylated acrylate polymer include polymers having a structure in which a main chain has a structure of polyacrylate or polymethacrylate, and a molecular chain end, in particular, both molecular chain ends, are blocked with a hydrolyzable silyl group and/or a silanol group (acrylate-modified silicone polymers).

Specific examples of the silylated alkylene polymer include polymers having a structure in which a main chain has a structure of a polyalkylene such as a polymer from an isobutylene monomer, and a molecular chain end, in particular, both molecular chain ends, are blocked with a hydrolyzable silyl group and/or a silanol group (alkylene-modified silicone polymers).

Among them, silylated oxypropylene polymers whose both molecular chain ends are blocked with a hydrolyzable silyl group and/or a silanol group and whose main chain is polypropylene oxide, and silylated acrylate polymers whose both molecular chain ends are blocked with a hydrolyzable silyl group and/or a silanol group and whose main chain is polyacrylate are preferable.

Since polymers whose molecular chain end is blocked with a silanol group is preferable from the viewpoint of rapidity of curing and a property of being cured to a deep part, silylated oxypropylene polymers whose both molecular chain ends are blocked with a hydrolyzable silyl group and/or a silanol group and whose main chain is polypropylene oxide are particularly preferable.

The organopolymer as the component (A) is more preferably an organopolymer of the following general formula (3) or (4), whose both molecular chain ends are blocked with a hydrolyzable silyl group or a hydroxysilyl group (silyl group or silanol group having a hydroxyl group bonded to a silicon atom): 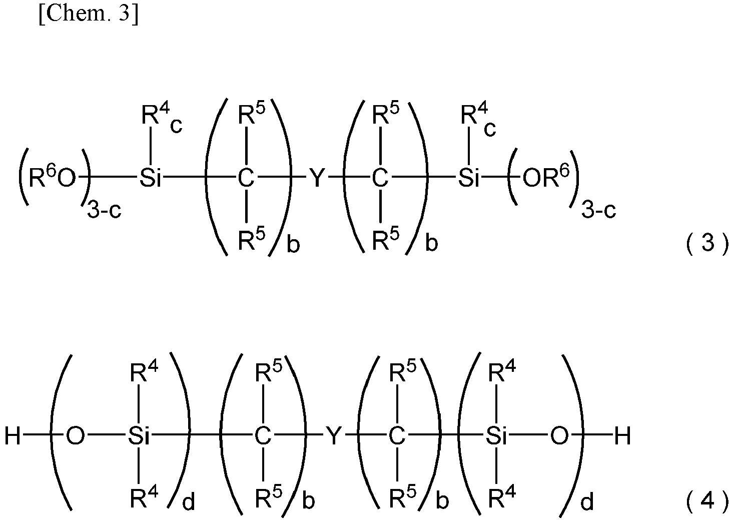 wherein R⁴ and R⁶ may be the same or different, each of R⁴ and R⁶ is an unsubstituted or substituted monovalent hydrocarbon group having 1 to 10 carbon atoms, and R⁵s are each independently an unsubstituted or substituted monovalent hydrocarbon group having 1 to 10 carbon atoms, or a hydrogen atom; b is independently an integer of 2 or more, c is, independently for each silicon atom bonded, 0, 1 or 2, and d is independently an integer of 1 to 5; and Y is a divalent organic group free of a siloxane structure.

In the above formulae (3) and (4), each of R⁴ and R⁶ is an unsubstituted or substituted monovalent hydrocarbon group having 1 to 10 carbon atoms, preferably 1 to 6 carbon atoms, and R⁵ is an unsubstituted or substituted monovalent hydrocarbon group having 1 to 10 carbon atoms, preferably 1 to 6 carbon atoms, or a hydrogen atom. Examples of R⁴, R⁵ and R⁶, each of which is an unsubstituted or substituted monovalent hydrocarbon group having 1 to 10 carbon atoms, preferably 1 to 6 carbon atoms, include alkyl groups such as a methyl group, an ethyl group, a n-propyl group, an isopropyl group, a n-butyl group, an isobutyl group, a tert-butyl group, a pentyl group, a neopentyl group, a hexyl group, a heptyl group and an octyl group; cycloalkyl groups such as a cyclopentyl group and a cyclohexyl group; alkenyl groups such as a vinyl group, an allyl group, a propenyl group, an isopropenyl group, a butenyl group, a pentenyl group and a hexenyl group; aryl groups such as a phenyl group, a tolyl group, a xylyl group and an α-, β-naphthyl group; aralkyl groups such as a benzyl group, a 2-phenylethyl group and a 3-phenylpropyl group, and these groups subjected to replacement of a part or all of hydrogen atoms by a halogen atom such as F, Cl or Br, for example, a 3-chloropropyl group, a 3,3,3-trifluoropropyl group and a 2-cyanoethyl group. Each of R⁴ and R⁶ is preferably a methyl group or a phenyl group, particularly preferably a methyl group. R⁵ is preferably a methyl group, an ethyl group, or a hydrogen atom, particularly preferably a methyl group or a hydrogen atom. R⁴, R⁵ and R⁶ may be the same group or different groups.

In formulae (3) and (4), b is independently an integer of 2 or more, preferably an integer of 2 to 8, more preferably 2, 3 or 4, particularly preferably 3.

In formula (3), c is, independently for each silicon atom bonded, 0, 1 or 2, preferably 0 or 1, particularly preferably 1.

In formula (4), d is independently an integer of 1 to 5, preferably an integer of 1 to 4.

In the above general formulae (3) and (4), Y is a divalent organic group free of a siloxane structure, and specific examples thereof include polyoxyalkylene groups such as a polyoxyethylene group, a polyoxypropylene group and a polyoxybutylene group, polyalkylene groups such as a polyisobutylene group, methyl methacrylate polymers of the following formula, and these groups subjected to interposition of one or more selected from an alkylene group, an ether bond oxygen atom, an amide bond, a urethane bond, a carbonyl bond, an ester bond and the like. 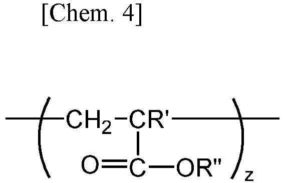 wherein R' is a hydrogen atom or a methyl group, R" is an alkyl group having 1 to 10 carbon atoms, such as a methyl group, an ethyl group, a n-propyl group, an isopropyl group, a n-butyl group, an isobutyl group, a tert-butyl group, a pentyl group, a neopentyl group or a hexyl group, and z indicates a polymerization degree of a repeat unit forming the main chain, and is an integer of 20 to 800.

Specific examples of the organopolymer as the component (A) include the following structures. 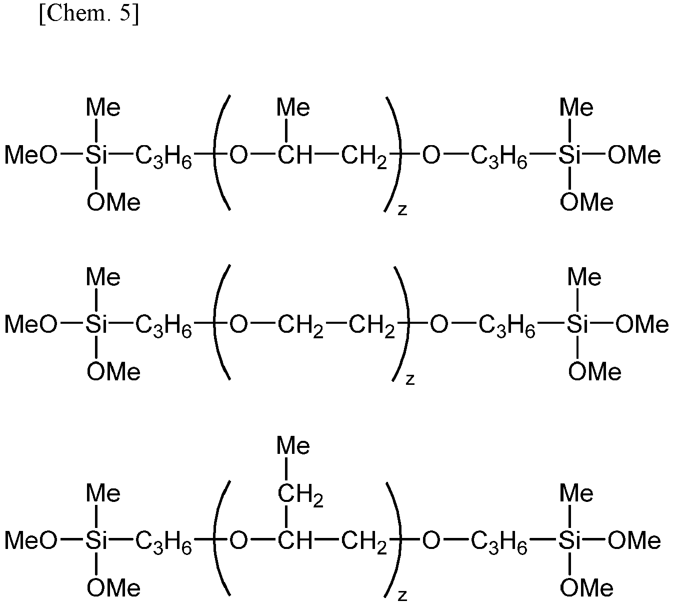 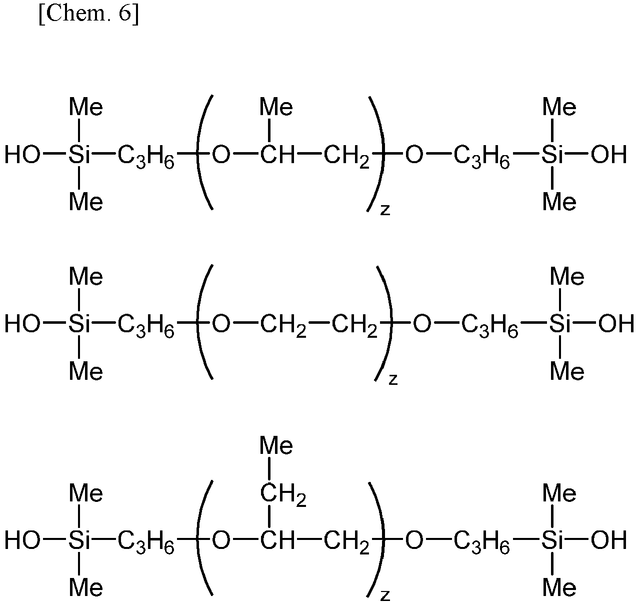 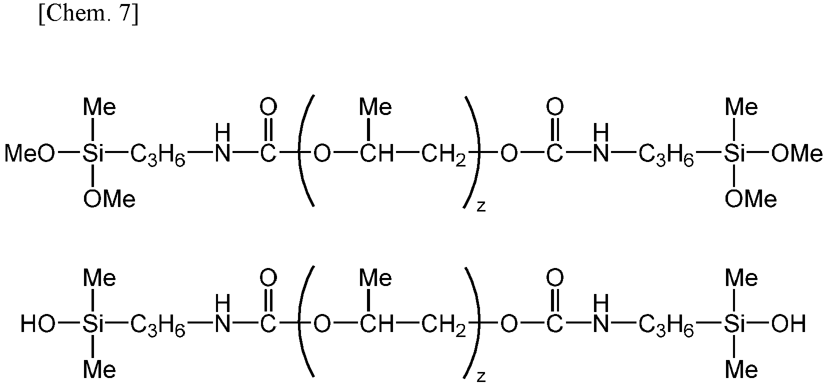 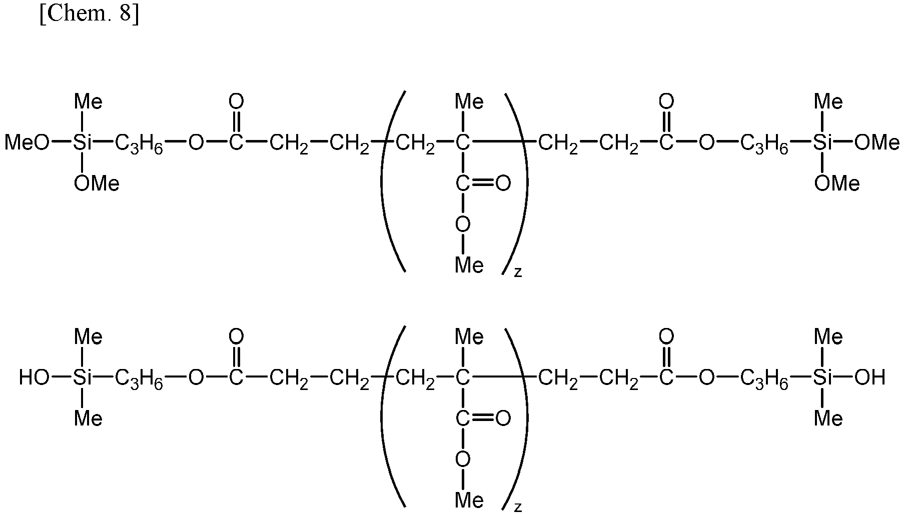 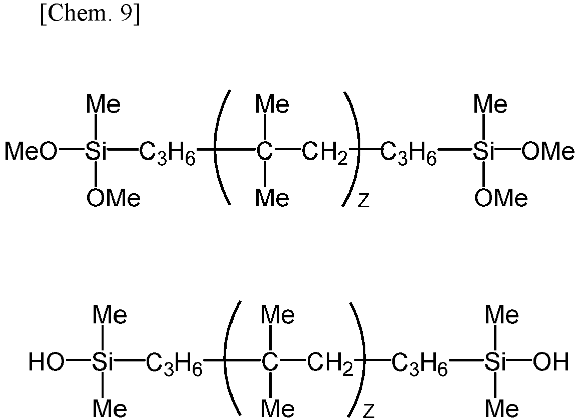 wherein z indicates a polymerization degree of a repeat unit forming the main chain, and is an integer of 20 to 800; and Me represents a methyl group.

In each of the above exemplary formulae, the methoxy group (MeO-) at the molecular chain end may be replaced by another lower alkoxy group such as an ethoxy group, and the hydroxydimethylsilyl group (-SiMe₂OH) at the molecular chain end may be replaced by a polydimethylsiloxanyl group (-[Si(Me)₂O]_{d}-H, d is an integer of 1 to 5) blocked with hydroxydimethylsilyl at the end.

The numerical average molecular weight of the organopolymer as the component (A) is preferably 2,000 to 50,000, more preferably 5,000 to 40,000, still more preferably 10,000 to 35,000. An excessively small numerical average molecular weight may deteriorate rubber physical properties, such as elongation and strength, of the resulting cured product, and an excessively large numerical average molecular weight may rapidly increase the viscosity of the composition, which is disadvantage in the aspect of handleability.

In the present invention, the molecular weight (or polymerization degree) can be determined as, for example, a numerical average molecular weight (or numerical average polymerization degree), a weight average molecular weight (or a weight average polymerization degree) or the like in terms of polystyrene in gel permeation chromatography (GPC) analysis using tetrahydrofuran (THF), toluene or the like as a developing solvent (the same applies hereinafter).

The polymers whose molecular chain end is blocked with a hydrolyzable silyl group and/or a hydroxysilyl group (silanol group) can be obtained by a known method in, for example, JP 6565787 (Patent Document 3). Specifically, a silylated oxypropylene polymer whose both molecular chain ends are blocked with a silanol group and whose main chain is polypropylene oxide can be produced by a method in which a polyoxyalkylene polymer such as polyoxypropylene polymer, whose molecular chain end is blocked with an alkenyl group having a CH₂=CH- structure such as an allyl group at an end thereof, is hydrosilylated in the presence of a platinum catalyst with an organosilicon compound having a silanol group (SiOH group) and a hydrosilyl group (SiH group), such as an organosilane or organosiloxane oligomer. Alternatively, the production can be performed by a method in which a polyoxyalkylene polymer such as polyoxypropylene polymer, whose molecular chain end is blocked with an alkenyl group having a CH₂=CH- structure such as an allyl group at an end thereof, is hydrosilylated in the presence of a platinum catalyst with an organosilicon compound having a chlorosilyl group (SiCl group) and a hydrosilyl group (SiH group), such as an organosilane or organosiloxane oligomer, and the chlorosilyl group is then converted into silanol (SiOH) through a hydrolysis reaction.

As the organopolymer as the component (A) whose molecular chain end is blocked with a hydrolyzable silyl group and/or a silanol group and whose polymer main chain is other than an organopolysiloxane (modified silicone polymer), a commercially available product may be used. For example, "MS POLYMER" manufactured by KANEKA CORPORATION or "GENIOSEL (registered trademark) (STP-E)" manufactured by Wacker Chemie AG (Germany) may be used as the polyether-modified silicone polymer, and "GENIOSIL (registered trademark) (SPUR/STP-U)" manufactured by Wacker Chemie AG (Germany) may be used as the urethane-modified silicone polymer.

The organopolymers as the component (A) whose molecular chain end is blocked with a hydrolyzable silyl group and/or a silanol group may be used alone, or in combination of two or more organopolymers having different structures and polymerization degrees as necessary.

### [Component (B) Hydrolyzable organosilane compound and/or partial hydrolytic condensate thereof]

The component (B) used for the room temperature curable resin composition of the present invention is a hydrolyzable organosilane compound of the following general formula (1) and/or a partial hydrolytic condensate thereof, is used as a crosslinking agent (curing agent), and releases a cyclic ketone compound such as cyclobutanone or cyclopentanone as a leaving group (leaving substance) by hydrolysis.

In the present invention, the term "partial hydrolytic condensate" means an organosiloxane oligomer which is generated by partially hydrolyzing and condensing the hydrolyzable organosilane compound and has three or more, preferably four or more remaining hydrolyzable groups in the molecule. 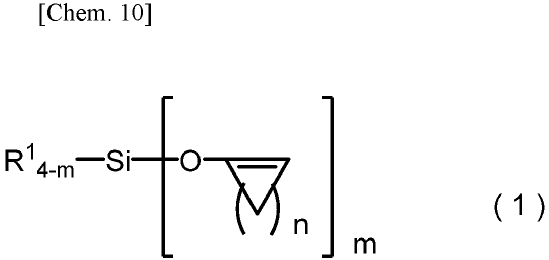 wherein R¹ is a monovalent hydrocarbon group having 1 to 10 carbon atoms, n is an integer of 1 to 8, and m is 3 or 4.

In the general formula (1), R¹ is a monovalent hydrocarbon group having 1 to 10 carbon atoms, preferably 1 to 6 carbon atoms, more preferably an alkyl group having 1 to 6 carbon atoms, an alkenyl group having 2 to 6 carbon atoms, an aryl group having 6 to 10 carbon atoms, or an aralkyl group having 7 to 10 carbon atoms, and examples of R¹ include alkyl groups such as a methyl group, an ethyl group, a propyl group, an isopropyl group, a butyl group, an isobutyl group, a sec-butyl group, a tert-butyl group, a pentyl group, a hexyl group, an octyl group, a 2-ethylhexyl group, a nonyl group and a decyl group; alkenyl groups such as a vinyl group, an allyl group, a propenyl group, an isopropenyl group, a butenyl group and a hexenyl group; aryl groups such as a phenyl group and a tolyl group; and aralkyl groups such as a benzyl group and a phenylethyl group. Among them, a methyl group, an ethyl group, a vinyl group, and a phenyl group are preferable, and a methyl group, a vinyl group and a phenyl group are particularly preferable.

In the above general formula (1), n is an integer of 1 to 8, preferably an integer of 2 to 6, more preferably an integer of 2 to 4, still more preferably 2 or 3. If n is 0, a cyclic structure is not formed. If n is an integer of 9 or more, the molecular weight of the hydrolyzable organosilane increases, so that purification by distillation becomes difficult, or a disadvantage in terms of cost arises because the addition amount necessary for securing storage-ability increases.

As described above, m is 3 or 4. If this number is less than 3 (i.e. if m is 0, 1 or 2,), rubber curing through a crosslinking reaction does not occur, and the component is not suitable as a crosslinking agent for a room temperature curable resin composition.

The leaving group (leaving compound) generated by hydrolysis of the hydrolyzable organosilane compound represented of the general formula (1) is a cyclic ketone compound such as cyclopropanone, cyclobutanone, cyclopentanone, cyclohexanone, cycloheptanone, cyclooctanone, cyclononanone or cyclodecanone, preferably cyclobutanone or cyclopentanone, more preferably cyclopentanone. Cyclobutanone and cyclopentanone have not been reported to have health harmfulness to the human body such as carcinogenicity and reproduction toxicity, or environmental harmfulness such as toxicity to aquatic organisms. Since cyclopentanone is industrially mass-produced, and easily obtained, and has high cost competitiveness, cyclopentanone is advantageous for production of a hydrolyzable organosilane compound as the component (B) as described later.

The hydrolyzable organosilane compound as the component (B) can be produced by, for example, reaction (e.g. dehydrochlorination reaction) of a chlorosilane compound corresponding to the hydrolyzable organosilane compound of the general formula (1) as a product and a cyclic ketone compound in the presence of a catalyst and a basic substance. This reaction formula is represented by, for example, the following formula [1]. 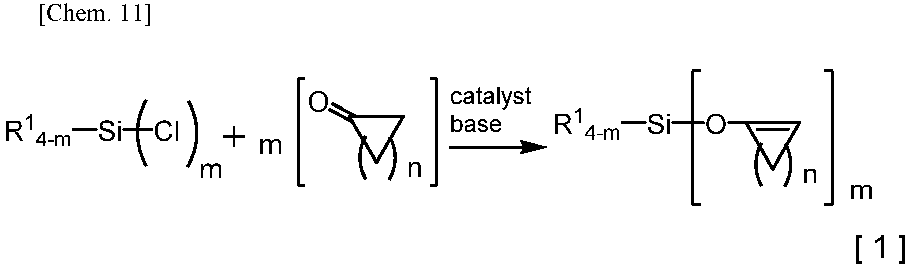 wherein R¹, n and m are as described above.

Here, examples of the chlorosilane compound include those shown below. Me is a methyl group.

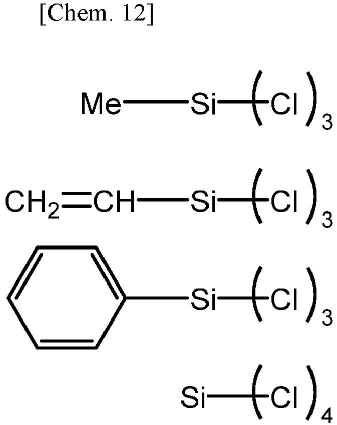

Here, examples of the cyclic ketone compound include those shown below.

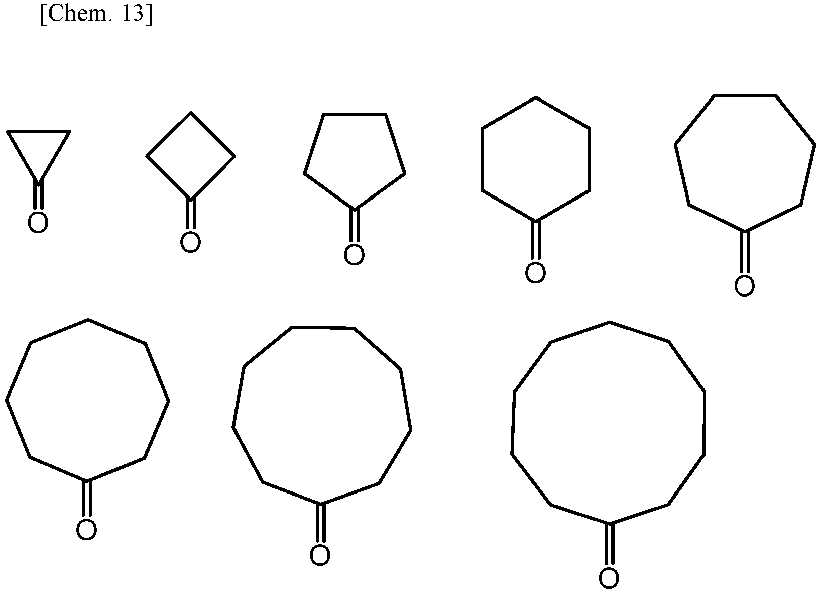

The addition amount of the cyclic ketone compound reacted with the chlorosilane compound is preferably 0.95 to 3.0 mol, more preferably 0.99 to 2.5 mol, still more preferably 1.0 to 2.0 mol per 1 mol of chlorine atoms in the chlorosilane compound. If the addition amount of the cyclic ketone compound is small, there is a possibility that the reaction is not completed, and if the addition amount of the cyclic ketone compound is excessively large, much time may be required for purification, leading to an increase in production time.

Examples of the catalyst used in the reaction include, but are not limited to, monovalent or divalent metal copper compounds, for example, copper chloride, copper bromide, copper iodide, copper sulfate, copper nitrate, copper carbonate, basic copper carbonate, copper formate, copper acetate, and copper butyrate.

The addition amount of the catalyst (metal copper compound) is preferably 0.001 to 0.5 mol, more preferably 0.002 to 0.2 mol, still more preferably 0.003 to 0.1 mol per 1 mol of the chlorosilane compound. If the addition amount of the catalyst is small, there is a possibility that the reaction is not completed, and if the addition amount of the catalyst is excessively large, a disadvantage in terms of cost arises.

As the basic substance used in the reaction, basic substances having low nucleophilicity, such as trimethylamine, triethylamine, tripropylamine, tributylamine, urea, diazabicycloundecene and diazabicyclononene, can be used. Among them, trimethylamine, triethylamine and tributylamine are preferable, and triethylamine is particularly preferable.

The addition amount of the basic substance is preferably 0.95 to 2.5 mol, more preferably 0.99 to 2.0 mol, still more preferably 1.0 to 1.5 mol per 1 mol of chlorine atoms in the chlorosilane compound. If the addition amount of the basic substance is small, there is a possibility that the reaction is not completed, and if the addition amount of the basic substance is excessively large, an economic disadvantage arises.

For production of the hydrolyzable organosilane compound as the component (B), a commonly used solvent may be used, and examples of the solvent include organic solvents, for example, aromatic hydrocarbons such as toluene, xylene and benzene; aliphatic hydrocarbons such as pentane, hexane, heptane, nonane, octane and decane; ethers such as dimethyl ether, methyl ethyl ether, tetrahydrofuran and dioxane; halogenated hydrocarbons such as perchloroethane, perchloroethylene, trichloroethane, chloroform and carbon tetrachloride; amides such as dimethylformamide; and esters such as ethyl acetate, methyl acetate and butyl acetate.

The amount of the solvent used is not particularly limited, and is, typically, in the range of 10 to 500 parts by weight, preferably 30 to 400 parts by weight, more preferably 50 to 300 parts by weight per 100 parts by weight of the cyclic ketone compound used.

For the condition of the reaction between the chlorosilane compound and the cyclic ketone compound, it is preferable that typically, the chlorosilane compound is added dropwise to the cyclic ketone compound at a temperature of 0 to 120°C, preferably 0 to 100°C, and the mixture is reacted at 50 to 120°C, preferably 60 to 100°C for 1 to 48 hours, more preferably for about 3 to 30 hours. If the temperature during the reaction is excessively low, there is a possibility that the reaction is not completed, and if the temperature during the reaction is excessively high, coloring of the product may increase. If the reaction time is excessively short, there is a possibility that the reaction is not completed, and if the reaction time is excessively long, productivity is adversely affected.

Purification after completion of the reaction can be performed by distilling an intended product in a decompression environment, and the decompression degree is preferably 1×10⁻⁵ to 3,000 Pa, more preferably 1×10⁻⁵ to 2,000 Pa, and the temperature during purification is preferably 100 to 250°C, more preferably 120 to 230°C. If the pressure during decompression (decompression degree) is excessively high, distillation may be difficult. If the temperature during purification is excessively low, purification by distillation may be difficult, and an excessively high temperature during purification may cause coloring and decomposition of the reactant.

Specific examples of the hydrolyzable organosilane compound as the component (B) include compounds of the following formula. Me represents a methyl group.

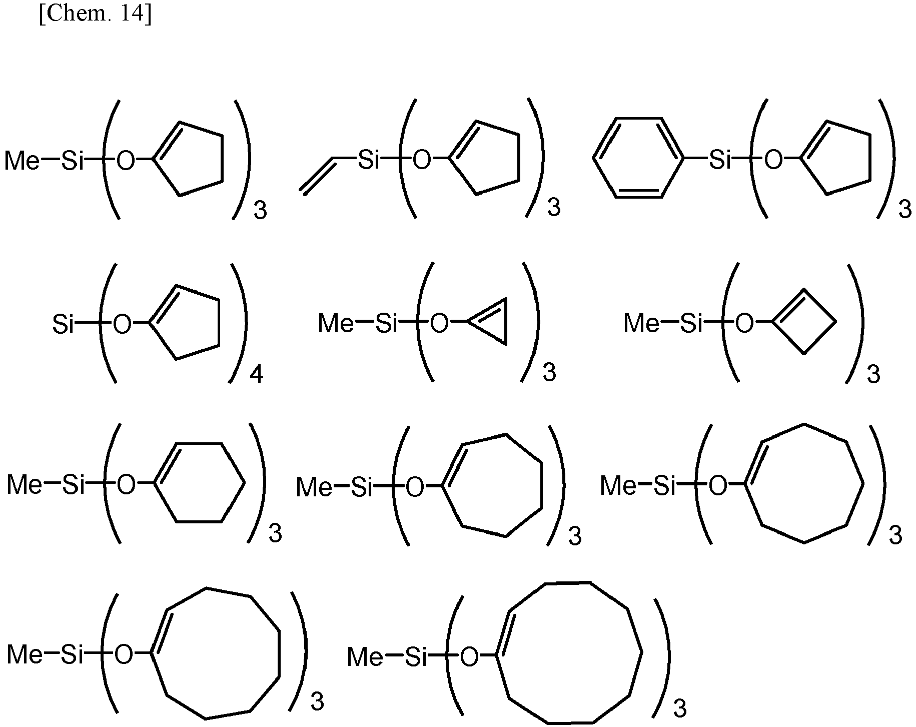

The components (B) may be used alone or used in combination of two or more thereof.

The compounding amount of the component (B) is 1 to 40 parts by weight, preferably 3 to 30 parts by weight, more preferably 5 to 20 parts by weight per 100 parts by weight of the component (A). If the compounding amount of the component (B) is less than 1 part by weight as the lower limit value, storage-ability during storage in a sealed container may be deteriorated. If the compounding amount of the component (B) is more than 40 parts by weight as the upper limit value, there is a possibility that the curability of the room temperature curable resin composition is significantly deteriorated, and the adhesive property is deteriorated.

The hydrolyzable organosilane compound and/or the partial hydrolytic condensate thereof as the component (B) are clearly distinct from a silane coupling agent and/or a partial hydrolytic condensate thereof as a component (D) as an optional component described later in that the component (B) does not have a monovalent hydrocarbon group having at least one functional group containing one or more atoms selected from a nitrogen atom, a sulfur atom and an oxygen atom in the molecule.

### [Component (C) Curing catalyst]

In the room temperature curable resin composition of the present invention, a curing catalyst as a component (C) can be blended as an optional component if necessary. As the curing catalyst as the component (C), a metallic or nonmetallic condensation catalyst generally used heretofore as a curing accelerator for a room temperature curable resin composition can be used. Examples thereof include organotin compounds (tin catalysts) such as dibutyltin methoxide, dibutyltin diacetate, dibutyltin dioctate, dibutyltin dilaurate, dioctyltin dilaurate, dioctyltin dioctate, dimethyltin dimethoxide and dimethyltin diacetate; organotitanium compounds (titanium catalysts) such as tetrapropyl titanate, tetrabutyl titanate, tetra-2-ethylhexyl titanate, dimethoxytitanium diacetylacetonate and titanium diisopropoxybis(ethylacetoacetate); amine compounds such as triethylamine, hexylamine, tetramethylguanidine and γ-tetramethylguanidylpropyltrimethoxysilane and salts thereof (organic strong base catalysts); and organobismuth compounds such as bismuth(2-ethylhexanoate) and bismuth(neodecanoate) and mixtures thereof (organobismuth catalysts). At least any one of these compounds can be used, i.e. the compounds can be used alone or in combination of two or more thereof.

In the present invention, curability and cured product performance equivalent to those when a tin catalyst is blended are exhibited by compounding any of a titanium catalyst, an organic strong base catalyst and an organobismuth catalyst among the above-described catalysts, and therefore from the viewpoint of environmental protection, it is preferable that a tin catalyst is not blended, and a titanium catalyst, an organic strong base catalyst or an organobismuth catalyst is blended.

The compounding amount of the component (C) which may be blended is preferably 0.01 to 10 parts by weight, more preferably 0.05 to 8 parts by weight, still more preferably 0.1 to 5 parts by weight per 100 parts by weight of the component (A). If the compounding amount of the component (E) is less than 0.01 parts by weight as the lower limit value, there is a possibility that a catalytic effect cannot be obtained, and if the compounding amount of the component (E) is more than 10 parts by weight as the upper limit value, the composition may have poor storage stability.

### [Component (D) Silane coupling agent and/or partial hydrolytic condensate thereof]

In the room temperature curable resin composition of the present invention, a silane coupling agent and/or a partial hydrolytic condensate thereof as a component (D) can be blended as an optional component if necessary. The component (D) is a silane coupling agent of the following general formula (2) (i.e. a hydrolyzable organosilane compound having a functional group-containing monovalent hydrocarbon group or a carbon functional silane) and/or a partial hydrolytic condensate thereof, which is a component for exhibiting good adhesive property in a cured product of the room temperature curable resin composition of the present invention.

R²R³ₐSiX₃₋ₐ (2)

wherein R² is a monovalent hydrocarbon group having 1 to 20 carbon atoms and having at least one functional group (with exclusion of a guanidyl group) containing one or more heteroatoms selected from a nitrogen atom, a sulfur atom and an oxygen atom; R³ is an unsubstituted or substituted monovalent hydrocarbon group having 1 to 10 carbon atoms, and X is a hydrolyzable group; and a is 0, 1 or 2.

In the formula (2), R² represents a monovalent hydrocarbon group having 1 to 20 carbon atoms and having at least one functional group containing one or more heteroatoms selected from a nitrogen atom, a sulfur atom, and an oxygen atom (e.g. an unsubstituted or substituted amino group, an unsubstituted or substituted imino group, an amide group, a ureido group, a mercapto group, an epoxy group or a (meth)acryloxy group, with the exclusion of a guanidyl group), and specific examples thereof include monovalent hydrocarbon groups having preferably 3 to 20, more preferably 3 to 14 carbon atoms and containing at least one heteroatom selected from a nitrogen atom, a sulfur atom and an oxygen atom, such as β-(2,3-epoxycyclohexyl)ethyl group, a β-(3,4-epoxycyclohexyl)ethyl group, a γ-glycidoxypropyl group, a γ-methacryloxypropyl group, a γ-acryloxypropyl group, a N-β-(aminoethyl)-γ-aminopropyl group [another name: N-2-(aminoethyl)-3-aminopropyl group], a γ-aminopropyl group, a N-phenyl-γ-aminopropyl group, a γ-ureidopropyl group, a γ-mercaptopropyl group and a γ-isocyanatopropyl group. R² is particularly preferably a γ-glycidoxypropyl group, a γ-aminopropyl group or a N-β-(aminoethyl)-γ-aminopropyl group.

In the above formula (2), R³ is an unsubstituted or substituted monovalent hydrocarbon group having 1 to 10 carbon atoms, preferably 1 to 6 carbon atoms, and examples thereof include alkyl groups such as a methyl group, an ethyl group, a propyl group, an isopropyl group, a butyl group, an isobutyl group, a sec-butyl group, a tert-butyl group, a pentyl group, a hexyl group, an octyl group, a 2-ethylhexyl group, a nonyl group and a decyl group; cycloalkyl groups such as a cyclohexyl group; alkenyl groups such as a vinyl group, an allyl group, a propenyl group, an isopropenyl group, a butenyl group and a hexenyl group; aryl groups such as a phenyl group and a tolyl group; and aralkyl groups such as a benzyl group and a phenylethyl group. Alternatively, groups in which a part of hydrogen atoms of any of the above-mentioned hydrocarbon groups is replaced by a halogen atom or the like such as chlorine, fluorine or bromine, for example, a trifluoropropyl group or the like are mentioned. Among them, a methyl group, an ethyl group, a propyl group and an isopropyl group are preferable. R³s may be the same group or different groups.

In the formula (2), examples of the hydrolyzable group X include a ketoxime group, an alkoxy group, an alkoxyalkoxy group, an acyloxy group, and an alkenyloxy group. Specific examples thereof include ketoxime groups having 3 to 8 carbon atoms, such as a dimethylketoxime group, a diethylketoxime group, a methylethylketoxime group and a methylisobutylketoxime group; alkoxy groups having 1 to 4, preferably 1 or 2 carbon atoms, such as a methoxy group, an ethoxy group, a propoxy group, an isopropoxy group, a butoxy group, an isobutoxy group, a sec-butoxy group and a tert-butoxy group; alkoxyalkoxy groups having 2 to 4 carbon atoms, such as a methoxymethoxy group and a methoxyethoxy group; acyloxy groups having 2 to 4 carbon atoms, such as an acetoxy and a propionoxy group; and alkenyloxy groups having 2 to 4 carbon atoms, such as a vinyloxy group, an allyloxy group, a propenoxy group and an isopropenoxy group. X is preferably a methoxy group. The hydrolyzable groups X may be the same group or different groups.

Specific examples of the silane coupling agent of formula (2) as the component (D) include aminosilanes such as γ-aminopropyltrimethoxysilane, γ-aminopropyltriethoxysilane and 3-2-(aminoethylamino)propyltrimethoxysilane [another name: N-2-(aminoethyl)-3-aminopropyltrimethoxysilane]; epoxysilanes such as γ-glycidoxypropyltrimethoxysilane and β-(3,4-epoxycyclohexyl)ethyltrimethoxysilane; (meth)acrylsilanes such as γ-(meth)acryloxypropyltrimethoxysilane and γ-(meth)acryloxypropyltriethoxysilane; mercaptosilanes such as γ-mercaptopropyltrimethoxysilane; and isocyanates such as γ-isocyanatopropyltrimethoxysilane.

The silane coupling agents and/or partial hydrolytic condensates thereof as the component (D) may be used alone or used in combination of two or more thereof.

The compounding amount of the component (D) which may be blended is preferably 0.01 to 5 parts by weight, more preferably 0.1 to 3 parts by weight per 100 parts by weight of the component (A). If the compounding amount of the component (D) is less than 0.01 parts by weight, there is a possibility that a cured product does not exhibit sufficient adhesive performance, and if the compounding amount of the component (D) is more than 5 parts by weight, there is a possibility that rubber strength after curing decreases, or curability is deteriorated.

### [Component (E) Inorganic filling agent]

In the room temperature curable resin composition of the present invention, an inorganic filling agent as a component (E) can be blended as an optional component if necessary. The inorganic filling agent as the component (E) is a reinforcing or non-reinforcing filling agent for imparting rubber physical properties to the room temperature curable resin composition of the present invention. Examples of the inorganic filling agent as the component (E) include silica-based filling agents such as dry silica such as pyrogenic silica, fused silica, crushed silica and fumed silica, wet silica such as precipitated silica and sol-gel process silica and crystalline silica (fine powder quartz), diatomaceous earth, carbon black, talc and bentonite which are surface-hydrophobized or untreated, calcium carbonate, zinc carbonate and magnesium carbonate, and calcium oxide, zinc oxide, magnesium oxide, aluminum oxide and aluminum hydroxide, and among them, calcium carbonate, fumed silica, precipitated silica, carbon black and aluminum oxide are preferable, and surface-hydrophobized calcium carbonate, fumed silica, precipitated silica, carbon black and aluminum oxide are more preferable. In this case, the amount of moisture in these inorganic filling agents is preferably small.

The type, amount and surface-treating method and the like of the surface treatment agent (hydrophobizing agent) are not particularly limited, and typically, organosilicon compounds such as chlorosilane, alkoxysilane and organosilazane, and treatment agents such as fatty acid, paraffin, silane coupling agents and titanium coupling agents can be applied.

The inorganic filling agents as the components (E) may be used alone or used in combination of two or more thereof.

The compounding amount of the component (E) which may be blended is preferably 1 to 500 parts by weight, more preferably 20 to 500 parts by weight, still more preferably 20 to 300 parts by weight, particularly preferably 50 to 300 parts by weight per 100 parts by weight of the component (A). If the compounding amount of the component (E) is less than 1 part by weight, there may be a problem of being unsuitable for a use purpose because sufficient rubber strength cannot be obtained, and if the compounding amount of the component (E) is more than 500 parts by weight, there is a possibility that the discharge property from a cartridge is deteriorated, storage stability is deteriorated, and mechanical properties in rubber physical properties obtained are deteriorated.

### [Other components]

In addition, in the room temperature curable resin composition of the present invention, generally known additives may be used in addition to the above-described components as long as the purpose of the present invention is not impaired. Examples of the additive include plasticizers such as dimethyl phthalate (DMP), diethyl phthalate (DEP), di-n-butyl phthalate (DBP), diheptyl phthalate (DHP), dioctyl phthalate (DOP), diisononyl phthalate (DINP), diisodecyl phthalate (DIDP), ditridecyl phthalate (DTDP), butyl benzyl phthalate (BBP), dicyclohexyl phthalate (DCHP), tetrahydrophthalic acid esters, dioctyl adipate (DOA), diisononyl adipate (DINA), diisodecyl adipate (DIDA), di-n-alkyl adipates, dibutyl diglycol adipate (BXA), bis(2-ethylhexyl) azelate (DOZ), dibutyl sebacate (DBS), dioctyl sebacate (DOS), dibutyl maleate (DBM), di-2-ethylhexyl maleate (DOM), dibutyl fumarate (DBF), tricresyl phosphate (TCP), triethyl phosphate (TEP), tributyl phosphate (TBP), tris(2-ethylhexyl) phosphate (TOP), tri(chloroethyl) phosphate (TCEP), trisdichloropropyl phosphate (CPP), tributoxyethyl phosphate (TBXP), tris((β-chloropropyl) phosphate (TMCPP), triphenyl phosphate (TPP), octyl diphenyl phosphate (ODP), acetyl triethyl citrate, acetyl tributyl citrate, trimellitic acid-based plasticizers, polyester-based plasticizers, chlorinated paraffin, stearic acid-based plasticizers, stearic acid-based plasticizers, and silicone oil (nonfunctional organopolysiloxanes) such as dimethyl polysiloxane. Examples of the plasticizer of recent date include polyoxypropylene glycol-based plasticizers, acrylic resins, acrylic polymer-based plasticizers, paraffin-based plasticizers, naphthene-based plasticizers, and high-boiling isoparaffin-based solvents such as high-boiling-point isoparaffin-based plasticizers. If necessary, colorants such as pigments, dyes and fluorescent brighteners, bioactive additives such as antifungal agents, antibacterial agents and marine organism repellents, surface modifiers such as phenyl silicone oil and fluorosilicone oil as bleed oil, and solvents such as solvent volatile oil and low-boiling-point isoparaffin can also be added.

The room temperature curable resin composition of the present invention can be obtained by uniformly mixing the above-described components, and further, predetermined amounts of the above-described various additives in a dry atmosphere. The room temperature curable resin composition of the present invention is cured by leaving the composition to stand at room temperature, and as the molding method, curing conditions and the like for the composition, a known method and known conditions appropriate to the type of the composition can be adopted.

The room temperature curable resin composition of the present invention, particularly a one-pack type composition, is stored in the absence of moisture, i.e. in a sealed container which cut off humidity, and easily cured at room temperature (23°C ± 15°C) by exposing to moisture in air when using.

The room temperature curable resin composition of the present invention is friendly to the human body and the environment as the compound generated from a crosslinking agent through a hydrolysis reaction during curing is a cyclic ketone compound having high safety, such as cyclopentanone. Further, cyclopentanone has high safety as it has a burning point of 35°C, which is higher than that of a dealcoholization-type compound that releases an alcohol compound such as methanol during curing of the composition. The room temperature curable resin composition of the present invention exhibits good curability with the use of various existing catalysts, and a cured product thereof is excellent in adhesive property. A composition having further reduced environmental hazardousness can be provided by using a non-silver catalyst.

Therefore, the room temperature curable resin composition of the present invention is useful as an adhesive agent, a sealing material, a potting agent, a coating agent or the like. The method for using the room temperature curable resin composition of the present invention as an adhesive agent, a sealing material, a potting agent or a coating agent may follow a heretofore known method.

Examples of the relevant article include automobile parts, automobile oil seals, electrical or electronic parts, building structures, and civil engineering structures.

### EXAMPLES

Hereinafter, the present invention is described in more detail by showing Synthesis Examples, Examples and Comparative Examples, but the present invention is not limited by these Examples. The viscosity is a value measured at 23°C with a rotational viscometer in accordance with the method specified in JIS Z 8803. The molecular weight is a value measured as a numerical average molecular weight in terms of polystyrene in GPC analysis using tetrahydrofuran as a developing solvent. Me represents a methyl group.

Note that in all Examples and Comparative Examples, a planetary mixer (manufactured by INOUE MGF., INC.) was used as an appropriate mixer. In the following Examples, physical property values such as a viscosity (a value measured by a rotational viscometer) are values at 23°C unless otherwise specified.

### [Synthesis Example 1]

### <Synthesis of polyoxypropylene containing silanol group at both molecular chain ends>

A 1 L four-necked separable flask equipped with a stirrer, a reflux condenser, a thermometer and a dropping funnel was charged with 600 g of polyoxypropylene with a numerical average molecular weight of 23,000, whose both molecular chain ends are blocked with an allyl group (0.058 mol in terms of functional groups of terminal allyl groups) and 2.4 g of a platinum catalyst (toluene solution of a Karstedt catalyst; platinum concentration: 1 wt%), and the temperature was raised to 90°C while the mixture was heated and stirred.

Subsequently, 19.6 g of 1-hydroxy-octamethyltetrasiloxane (that is, 1-hydroxy-7-hydride-1,1,3,3,5,5,7,7-octamethyltetrasiloxane) (amount of functional groups at Si-H end: 0.066 mol) was added dropwise, and the reaction system was maintained at a reaction temperature of 90 to 95°C for 6 hours. After completion of the reaction, the reaction product was cooled to room temperature to obtain 570 g of polyoxypropylene containing a silanol group at both molecular chain ends (a polyoxyalkylene compound containing a silanol group at both molecular chain ends, whose both molecular chain ends are blocked with -(CH₂)₃-[Si(Me)₂O]₄-H and whose main chain is polyoxypropylene (in the above formula (4), R⁴ = methyl group, R⁵ = hydrogen atom, b = 3, d = 4 and Y = polyoxypropylene group)) (yield: 92%, viscosity: 24,000 mPa·s, numerical average molecular weight: 24,000).

### [Synthesis Example 2]

### <Synthesis of hydrolyzable organosilane compound 1>

A 5,000 mL four-neck separable flask equipped with a mechanical stirrer, a thermometer, a reflux tube and a dropping funnel was charged with 834 g (9.9 mol) of cyclopentanone, 825 g (8.2 mol) of triethylamine (TEA), 5 g (0.05 mol) of copper (I) chloride and 1,500 ml of hexane, and 400 g (2.47 mol) of vinyltrichlorosilane was added dropwise at 40 to 60°C over about 2 hours. Thereafter, the mixture was stirred at 80°C for 12 hours, triethylamine hydrochloride generated was then removed by filtration, hexane was distilled off from the filtrate under the conditions of 100°C and normal pressure, and the mixture was then distilled under the conditions of 180°C and 300 Pa to obtain a hydrolyzable organosilane compound 1 (yield 532 g, yield coefficient 69%). This reaction formula is represented by, for example, the following formula [2].

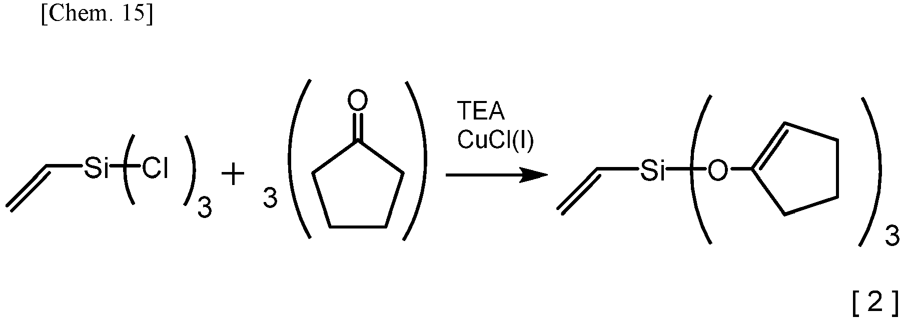

### [Synthesis Example 3]

### <Synthesis of hydrolyzable organosilane compound 2>

A 5,000 mL four-neck separable flask equipped with a mechanical stirrer, a thermometer, a reflux tube and a dropping funnel was charged with 834 g (9.9 mol) of cyclopentanone, 825 g (8.2 mol) of triethylamine (TEA), 5 g (0.05 mol) of copper (I) chloride and 1,500 ml of hexane, and 368 g (2.47 mol) of methyltrichlorosilane was added dropwise at 40 to 60°C over about 2 hours. Thereafter, the mixture was stirred at 80°C for 12 hours, triethylamine hydrochloride generated was then removed by filtration, hexane was distilled off from the filtrate under the conditions of 100°C and normal pressure, and the mixture was then distilled under the conditions of 170°C and 300 Pa to obtain a hydrolyzable organosilane compound 2 (yield 519 g, yield coefficient 71%). This reaction formula is represented by, for example, the following formula [3].

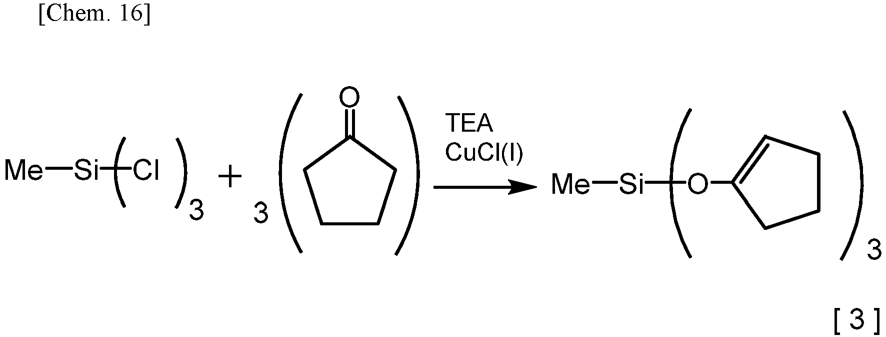

### [Example 1]

To (A-1) 100 parts by weight of polyoxypropylene containing a silanol group at both molecular chain ends, which had been synthesized in Synthesis Example 1, (E) 10 parts by weight of fumed silica whose surface is treated with dimethyldichlorosilane (product name: MU-215, manufactured by Shin-Etsu Chemical Co., Ltd.) were added, the mixture was sufficiently mixed, (B-1) 8 parts by weight of the hydrolyzable organosilane compound 1 was then added, and the mixture was sufficiently mixed. Finally, (D-1) 1 part by weight of γ-aminopropyltrimethoxysilane (product name; KBM-903, manufactured by Shin-Etsu Chemical Co., Ltd.) and (C-1) 0.1 parts by weight of dioctyltin dilaurate were added, and the mixture was thoroughly mixed under reduced pressure to obtain a composition 1.

### [Example 2]

To (A-1) 100 parts by weight of polyoxypropylene containing a silanol group at both molecular chain ends, which had been synthesized in Synthesis Example 1, (E) 10 parts by weight of fumed silica whose surface is treated with dimethyldichlorosilane (product name: MU-215, manufactured by Shin-Etsu Chemical Co., Ltd.) were added, the mixture was sufficiently mixed, (B-1) 8 parts by weight of the hydrolyzable organosilane compound 1 was then added, and the mixture was sufficiently mixed. Finally, (D-2) 1 part by weight of γ-glycidoxypropyltrimethoxysilane (product name; KBM-403, manufactured by Shin-Etsu Chemical Co., Ltd.) and (C-2) 4 parts by weight of titaniumdiisopropoxybis(ethylacetoacetate) (product name; ORGATIX TC750, manufactured by Matsumoto Fine Chemical Co., Ltd.) were added, and the mixture was thoroughly mixed under reduced pressure to obtain a composition 2.

### [Example 3]

To (A-1) 100 parts by weight of polyoxypropylene containing a silanol group at both molecular chain ends, which had been synthesized in Synthesis Example 1, (E) 10 parts by weight of fumed silica whose surface is treated with dimethyldichlorosilane (product name: MU-215, manufactured by Shin-Etsu Chemical Co., Ltd.) were added, the mixture was sufficiently mixed, (B-1) 8 parts by weight of the hydrolyzable organosilane compound 1 was then added, and the mixture was sufficiently mixed. Finally, (D-3) 1 part by weight of N-2-(aminoethyl)-3-aminopropyltrimethoxysilane (product name; KBM-603, manufactured by Shin-Etsu Chemical Co., Ltd.) and (C-3) 0.6 parts by weight of γ-tetramethylguanidylpropyltrimethoxysilane were added, and the mixture was thoroughly mixed under reduced pressure to obtain a composition 3.

### [Example 4]

To (A-1) 100 parts by weight of polyoxypropylene containing a silanol group at both molecular chain ends, which had been synthesized in Synthesis Example 1, (E) 10 parts by weight of fumed silica whose surface is treated with dimethyldichlorosilane (product name: MU-215, manufactured by Shin-Etsu Chemical Co., Ltd.) were added, the mixture was sufficiently mixed, (B-1) 8 parts by weight of the hydrolyzable organosilane compound 1 was then added, and the mixture was sufficiently mixed. Finally, (D-1) 1 part by weight of γ-aminopropyltrimethoxysilane (product name; KBM-903, manufactured by Shin-Etsu Chemical Co., Ltd.) and (C-4) 1 part by weight of an organobismuth catalyst (product name; NEOSTANN U-600, manufactured by Nitto Kasei Co., Ltd.) containing bismuthtris(2-ethylhexanoate) as a principal component were added, and the mixture was thoroughly mixed under reduced pressure to obtain a composition 4.

### [Example 5]

To (A-1) 100 parts by weight of polyoxypropylene containing a silanol group at both molecular chain ends, which had been synthesized in Synthesis Example 1, (E) 10 parts by weight of fumed silica whose surface is treated with dimethyldichlorosilane (product name: MU-215, manufactured by Shin-Etsu Chemical Co., Ltd.) were added, the mixture was sufficiently mixed, (B-2) 8 parts by weight of the hydrolyzable organosilane compound 2 was then added, and the mixture was sufficiently mixed. Finally, (D-1) 1 part by weight of γ-aminopropyltrimethoxysilane (product name; KBM-903, manufactured by Shin-Etsu Chemical Co., Ltd.) and (C-3) 0.6 parts by weight of γ-tetramethylguanidylpropyltrimethoxysilane were added, and the mixture was thoroughly mixed under reduced pressure to obtain a composition 5.

### [Example 6]

To (A-2) 100 parts by weight of KANEKA MS POLYMER S303H (polyoxypropylene whose both molecular chain ends are blocked with a dimethoxy(methyl)silylpropyl group (in the above general formula (3), R⁴ = R⁶ = methyl group, R⁵ = hydrogen atom, b = 3, c = 2, Y = polyoxypropylene group), manufactured by KANEKA CORPORATION, numerical average molecular weight: 17,500), (E) 10 parts by weight of fumed silica whose surface is treated with dimethyldichlorosilane (product name: MU-215, manufactured by Shin-Etsu Chemical Co., Ltd.) were added, the mixture was sufficiently mixed, (B-2) 8 parts by weight of the hydrolyzable organosilane compound 2 was then added, and the mixture was sufficiently mixed. Finally, (D-2) 1 part by weight of γ-glycidoxypropyltrimethoxysilane (product name; KBM-403, manufactured by Shin-Etsu Chemical Co., Ltd.) and (C-3) 0.6 parts by weight of γ-tetramethylguanidylpropyltrimethoxysilane were added, and the mixture was thoroughly mixed under reduced pressure to obtain a composition 6.

### [Comparative Example 1]

To (A-1) 100 parts by weight of polyoxypropylene containing a silanol group at both molecular chain ends, which had been synthesized in Synthesis Example 1, (E) 10 parts by weight of fumed silica whose surface is treated with dimethyldichlorosilane (product name: MU-215, manufactured by Shin-Etsu Chemical Co., Ltd.) were added, the mixture was sufficiently mixed, (B') 8 parts by weight of methyltrimethoxysilane was then added, and the mixture was sufficiently mixed. Finally, (D-1) 1 part by weight of γ-aminopropyltrimethoxysilane (product name; KBM-903, manufactured by Shin-Etsu Chemical Co., Ltd.) and (C-1) 0.1 parts by weight of dioctyltin dilaurate were added, and the mixture was thoroughly mixed under reduced pressure to obtain a composition 7.

### [Comparative Example 2]

To (A-1) 100 parts by weight of polyoxypropylene containing a silanol group at both molecular chain ends, which had been synthesized in Synthesis Example 1, (E) 10 parts by weight of fumed silica whose surface is treated with dimethyldichlorosilane (product name: MU-215, manufactured by Shin-Etsu Chemical Co., Ltd.) were added, the mixture was sufficiently mixed, (B') 8 parts by weight of methyltrimethoxysilane was then added, and the mixture was sufficiently mixed. Finally, (D-1) 1 part by weight of γ-aminopropyltrimethoxysilane (product name; KBM-903, manufactured by Shin-Etsu Chemical Co., Ltd.) and (C-3) 0.6 parts by weight of γ-tetramethylguanidylpropyltrimethoxysilane were added, and the mixture was thoroughly mixed under reduced pressure to obtain a composition 8.

### [Comparative Example 3]

To (A-1) 100 parts by weight of polyoxypropylene containing a silanol group at both molecular chain ends, which had been synthesized in Synthesis Example 1, (E) 10 parts by weight of fumed silica whose surface is treated with dimethyldichlorosilane (product name: MU-215, manufactured by Shin-Etsu Chemical Co., Ltd.) were added, the mixture was sufficiently mixed, (B") 8 parts by weight of vinyltris(methylethylketoxime)silane was then added, and the mixture was sufficiently mixed. Finally, (D-3) 1 part by weight of N-2-(aminoethyl)-3-aminopropyltrimethoxysilane (product name; KBM-603, manufactured by Shin-Etsu Chemical Co., Ltd.) and (C-1) 0.1 parts by weight of dioctyltin dilaurate were added, and the mixture was thoroughly mixed under reduced pressure to obtain a composition 9.

Table 1 shows a list of the obtained compositions.

**[Table 1]**

| Component (pbw) | | Example 1 | Example 2 | Example 3 | Example 4 | Example 5 | Example 6 | Comp. Example 1 | Comp. Example 2 | Comp. Example 3 |
|---|---|---|---|---|---|---|---|---|---|---|
| | | Composition 1 | Composition 2 | Composition 3 | Composition 4 | Composition 5 | Composition 6 | Composition 7 | Composition 8 | Composition 9 |
| A-1 | Polyoxypropylene containing silanol group at both molecular chain ends | 100 | 100 | 100 | 100 | 100 | | 100 | 100 | 100 |
| A-2 | KANEKA MS POLYMER S303H | | | | | | 100 | | | |
| B-1 | Hydrolyzable organosilane compound 1 | 8 | 8 | 8 | 8 | | | | | |
| B-2 | Hydrolyzable organosilane compound 2 | | | | | 8 | 8 | | | |
| B' | Methyltrimethoxysilane | | | | | | | 8 | 8 | |
| B" | Vinyltris(methylethylketoxime)silane | | | | | | | | | 8 |
| C-1 | Dioctyltin dilaurate | 0.1 | | | | | | 0.1 | | 0.1 |
| C-2 | Titaniumdiisopropoxy-bis(ethylacetoacetate) | | 4 | | | | | | | |
| C-3 | γ-tetramethylguanidylpropyltrimethoxysilane | | | 0.6 | | 0.6 | 0.6 | | 0.6 | |
| C-4 | Bismuth-tris(2-ethylhexanoate) | | | | 1 | | | | | |
| D-1 | γ-aminopropyltrimethoxysilane | 1 | | | 1 | 1 | | 1 | 1 | |
| D-2 | γ-glycidoxypropyltrimethoxysilane | | 1 | | | | 1 | | | |
| D-3 | N-2-(aminoethyl)-3-aminopropyltrimethoxysilane | | | 1 | | | | | | 1 |
| E | Fumed silica whose surface is treated with dimethyldichlorosilane | 10 | 10 | 10 | 10 | 10 | 10 | 10 | 10 | 10 |

### [Test method]

Evaluation was performed as follows for the compositions 1 to 9 prepared in Examples and Comparative Examples described above.

### Tack-free time

Using each of the compositions 1 to 9 prepared in Examples and Comparative Examples described above, the tack-free time (skin-over time) was measured in accordance with the method specified in JIS A 5758.

### Rubber physical properties

Each of the compositions 1 to 9 prepared in Examples and Comparative Examples described above was poured into a 2 mm mold and aged at 23°C and 50% RH for 7 days to obtain a rubber sheet having a thickness of 2 mm. Using the rubber sheet having a thickness of 2 mm, rubber physical properties (type A durometer hardness, elongation at break, tensile strength) were measured in accordance with JIS K 6249.

### Shear adhesive force and cohesive fracture ratio

Each of the compositions 1 to 9 prepared in Examples and Comparative Examples described above was cured by aging the composition between two aluminum plates having a width of 25 mm and a length of 100 mm at 23°C and 50% RH for 7 days, so that a rubber cured product layer bonded to each of the upper and lower aluminum plates by an area of 2.5 cm² and a thickness of 1 mm was formed to produce a shear adhesion test specimen specified in JIS K 6249. Using each of the test specimens, the shear adhesive strength to aluminum and the cohesive fracture ratio were measured in accordance with the method specified in JIS K 6249, and cohesive fracture ratios were compared.

Table 2 shows the results together with compounds desorbed during curing in the compositions 1 to 9 prepared in Examples and Comparative Examples described above, health and environmental harmfulness of the compounds desorbed, burning points and boiling points of leaving groups, and catalysts used.

**[Table 2]**

| | | Example 1 | Example 2 | Example 3 | Example 4 | Example 5 | Example 6 | Comp. Example 1 | Comp. Example 2 | Comp. Example 3 |
|---|---|---|---|---|---|---|---|---|---|---|
| Tack-free time | min | 6 | 10 | 3 | 8 | 6 | 10 | 12 | 30 or more | 6 |
| Hardness: Type A | - | 16 | 12 | 19 | 16 | 18 | 26 | 14 | 8 | 19 |
| Elongation at break | % | 320 | 410 | 330 | 290 | 350 | 180 | 410 | 210 | 330 |
| Tensile strength | MPa | 1.3 | 1.2 | 1.4 | 1.4 | 1.2 | 1.4 | 1.2 | 0.6 | 1.3 |
| Aluminum shear adhesive strength | MPa | 1.1 | 1.0 | 1.1 | 1.1 | 1.1 | 1.2 | 1.1 | 0.5 | 1.2 |
| Cohesive fracture ratio | % | 100 | 100 | 100 | 100 | 100 | 100 | 100 | 30 | 100 |
| Compound desorbed during curing | | Cyclopentanone | Cyclopentanone | Cyclopentanone | Cyclopentanone | Cyclopentanone | Cyclopentanone | Methanol | Methanol | 2-Butanone oxime |
| Health or environmental harmfulness of compound desorbed | | Not harmful | Not harmful | Not harmful | Not harmful | Not harmful | Not harmful | *1) Harmful | *1) Harmful | *2) Harmful |
| Burning point of leaving group | °C | 35 | 35 | 35 | 35 | 35 | 35 | 11 | 11 | 53 |
| Boiling point of leaving group | °C | 130 | 130 | 130 | 130 | 130 | 130 | 65 | 65 | 53 |
| Catalyst used | | Tin | Titanium | Organic strong base | Organobismuth | Organic strong base | Organic strong base | Tin | Organic strong base | Tin |

| | | | | | | | | | | |
|---|---|---|---|---|---|---|---|---|---|---|
| *1) Deleterious substance, damage to organ *2) Risk of carcinogenesis, harmful to aquatic organisms | | | | | | | | | | |

The compositions of Examples 1 to 6 in which a predetermined polyoxyalkylene-based compound was used as a base polymer and a non-cyclic ketone-type crosslinking agent was used all exhibited good rubber physical properties and adhesive property. The results of Examples showed that the compositions of the present invention had good curability even when varied catalysts such as a tin catalyst, a titanium catalyst, an organic strong base catalyst and an organobismuth catalyst were used. In particular, the compositions of Examples 3 and 5 in which a polyoxyalkylene compound having a silanol group at an end thereof and an organic strong base catalyst were used had a short tack free time, and further improved curability. On the other hand, for Comparative Examples, the compositions of Comparative Examples 1 and 3 in which a tin catalyst was used had physical properties equivalent to those in Examples, but the composition of Comparative Example 2 in which an organic strong base catalyst was used had reduced curability.

The compound released by the compositions of Examples during curing is cyclopentanone, which is a compound having high safety without having been reported to have health harmfulness to the human body such as carcinogenicity and reproduction toxicity, or environmental harmfulness such as toxicity to aquatic organisms. On the other hand, the compounds released by the compositions of Comparative Examples during curing are all indicated as having health harmfulness in SDS (safety data sheet) or the like. The compounds include 2-butanone oxime which may be carcinogenic and has toxicity to aquatic organisms, methanol which is designated as a deleterious substance and has strong toxicity to the human body. In addition, it can be seen that the room temperature curable resin composition of the present invention is further excellent from the viewpoint of the health of the human body and environmental protection because methanol has a lower burning point and boiling point as compared to cyclopentanone.

## Claims

1. A room temperature curable resin composition comprising:
(A) 100 parts by weight of an organopolymer whose molecular chain end is blocked with a hydrolyzable silyl group and/or a hydroxysilyl group and whose polymer main chain is other than an organopolysiloxane; and
(B) 1 to 40 parts by weight of a hydrolyzable organosilane compound of the following general formula (1) and/or a partial hydrolytic condensate thereof: 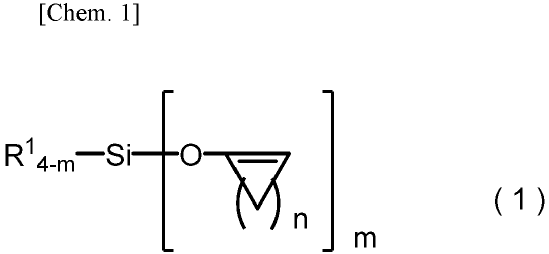 wherein R¹ is a monovalent hydrocarbon group having 1 to 10 carbon atoms, n is an integer of 1 to 8, and m is 3 or 4.

2. The room temperature curable resin composition according to claim 1, wherein the hydrolyzable organosilane compound and/or a partial hydrolytic condensate thereof as the component (B) desorbs a cyclic ketone compound by hydrolysis.

3. The room temperature curable resin composition according to claim 2, wherein the cyclic ketone compound desorbed is cyclobutanone or cyclopentanone.

4. The room temperature curable resin composition according to any one of claims 1 to 3, wherein a numerical average molecular weight of the organopolymer as the component (A) is 2,000 to 50,000.

5. The room temperature curable resin composition according to any one of claims 1 to 4, further comprising (C) 0.01 to 10 parts by weight of a curing catalyst per 100 parts by weight of the component (A).

6. The room temperature curable resin composition according to claim 5, wherein the (C) curing catalyst is at least one selected from a tin catalyst, a titanium catalyst, an organic strong base catalyst, and an organobismuth catalyst.

7. The room temperature curable resin composition according to any one of claims 1 to 6, which is free of a tin catalyst.

8. The room temperature curable resin composition according to any one of claims 1 to 7, further comprising (D) 0.01 to 5 parts by weight of a silane coupling agent of the following general formula (2) and/or a partial hydrolytic condensate thereof per 100 parts by weight of the component (A):
R²R³ₐSiX₃₋ₐ (2)
wherein R² is a monovalent hydrocarbon group having 1 to 20 carbon atoms and having at least one functional group (with exclusion of a guanidyl group) containing one or more heteroatoms selected from a nitrogen atom, a sulfur atom and an oxygen atom, R³ is an unsubstituted or substituted monovalent hydrocarbon group having 1 to 10 carbon atoms, X is a hydrolyzable group, and a is 0, 1 or 2.

9. The room temperature curable resin composition according to any one of claims 1 to 8, further comprising (E) 1 to 500 parts by weight of an inorganic filling agent per 100 parts by weight of the component (A).

10. The room temperature curable resin composition according to claim 9, wherein the component (E) is one or more inorganic filling agents selected from calcium carbonate, fumed silica, precipitated silica, carbon black and aluminum oxide.

11. An automobile part comprising a cured product of the room temperature curable resin composition according to any one of claims 1 to 10.

12. An automobile oil seal comprising a cured product of the room temperature curable resin composition according to any one of claims 1 to 10.

13. An electrical or electronic part comprising a cured product of the room temperature curable resin composition according to any one of claims 1 to 10.

14. A building structure comprising a cured product of the room temperature curable resin composition according to any one of claims 1 to 10.

15. A civil engineering structure comprising a cured product of the room temperature curable resin composition according to any one of claims 1 to 10.

16. An adhesive agent comprising the room temperature curable resin composition according to any one of claims 1 to 10.

17. A sealing material comprising the room temperature curable resin composition according to any one of claims 1 to 10.

18. A potting agent comprising the room temperature curable resin composition according to any one of claims 1 to 10.

19. A coating agent comprising the room temperature curable resin composition according to any one of claims 1 to 10.
